# EUROPÄISCHE PATENTANMELDUNG

(11) **EP 0 548 823 A1**
(43) Veröffentlichungstag der Anmeldung: **30.06.1993**
(21) Anmeldenummer: 92121545.5
(22) Anmeldetag: 18.12.1992
(51) Int. Cl.: B29C 45/33, B29C 45/26

(54) **Spritzgussform**

(30) Priorität: 23.12.1991 DE 9115966 U
(71) Anmelder: IFW MANFRED OTTE GESELLSCHAFT m.b.H. & Co. KG, 4563 Micheldorf (AT)
(72) Erfinder: Schwaiger, Ernst, A-4563 Micheldorf (AT); Mitteregger, Erich, A-4563 Micheldorf (AT)
(74) Vertreter: Hofinger, Engelbert, DDr.

(57) **Zusammenfassung**

Beschrieben wird eine Spritzgußform zum Herstellen eines Rohrstückes, mit einer teilbaren Außenform (5, 5') und einem entlang einer Formhälfte der Außenform verschiebbaren Formkern (1), dessen Abstand von seiner eingeschobenen Stellung bewegungsschlüssig durch seinen seitlichen Abstand von der anderen Formhälfte der Außenform bestimmt ist, wobei ein die Trennebene (T) der Außenform überbrückender, an dieser Formhälfte angeordneter Schieber (4) mit dem Formkern (1) in Eingriff steht.

## Beschreibung

Die Erfindung bezieht sich auf eine Spritzgußform zum Herstellen eines Rohrstückes, mit einer teilbaren Außenform und einem entlang einer Formhälfte der Außenform verschiebbaren Formkern, dessen Abstand von seiner eingeschobenen Stellung bewegungsschlüssig durch seinen seitlichen Abstand von der anderen Formhälfte der Außenform bestimmt ist, wobei ein die Trennebene der Außenform überbrückender, an dieser Formhälfte angeordneter Schieber mit dem Formkern in Eingriff steht.

Der Vorteil derartiger Einrichtungen liegt darin, daß zum Ziehen des Formkerns nach der Herstellung des Rohrstückes bzw. zum Einschieben desselben in Vorbereitung eines neuen Spritzvorganges kein gesonderter, beispielsweise hydraulischer, Antrieb erforderlich ist. Durch das Auseinanderfahren der Formhälften der Außenform wird zwangsläufig der Kern gezogen, durch das Zusammenfahren wieder eingeschoben.

Bei einer bekannten Einrichtung der eingangs definierten Gattung ist der Schieber als Zapfen ausgebildet, welcher eine axiale Bohrung im Formkern durchsetzt. Damit ist zunächst der Durchmesser des Schiebers und damit seine Festigkeit stark eingeschränkt, da im Rohrkern keine beliebig große Bohrung angebracht werden kann. Dies bedeutet, daß bei größeren Werkzeugen die bekannte Anordnung nicht anwendbar ist, sondern eine gesondere hydraulische Zieheinrichtung vorgesehen werden muß. Bei der bekannten Einrichtung ist weiterhin das Verhältnis der Geschwindigkeiten des Formkerns einerseits und der seitlich davon wegbewegten Formhälfte andererseits notwendigerweise konstant, was insbesondere am Anfang der Öffnungsbewegung, wo der Formkern vom Spritzling gelöst werden muß, nachteilig ist.

Die Erfindung schafft eine Einrichtung, welche von den Beschränkungen der bekannten Konstruktion frei ist. Dies wird dadurch erreicht, daß der Formkern mindestens einen seitlichen Vorsprung aufweist, der mit einer Nut des Schiebers in Eingriff steht.

Obwohl prinzipiell eine einseitige Anordnung des erfindungsgemäßen Vorsprunges vorgesehen ist, werden die beim Stand der Technik als Nachteil empfundenen ungleichmäßigen Belastungen und daraus resultierenden Verkantungen am besten dadurch vermieden, daß der Schieber durch zwei seitlich des Formkerns verlaufende Platten gebildet ist und die korrespondierenden Vorsprünge in der Trennebene der Außenform angeordnet sind. Zur Herabsetzung der Reibung zwischen Vorsprüngen und Führungsnuten empfiehlt es sich, die Vorsprünge durch Rollen zu verkörpern.

Wenn vorgesehen wird, daß die Nuten in ihren Endbereichen einen größeren Winkel mit der Bahn des Formkerns einschließen als in ihrem mittleren Bereich, stehen am Anfang der Bewegung größere Kräfte zum Losreißen des Formkernes vom Spritzling und am Ende der Bewegung zum Abbremsen des Formkernes zur Verfügung.

Der die Trennebene der Außenform überbrückende Schieber darf üblicherweise aus Platzgründen nicht über die Rückseite jener Formhälfte vorstehen, an welcher der Formkern längsverschiebbar geführt ist. Reicht der auf diese Weise erzielbare Verschiebeweg für den Formkrn nicht aus, kann vorgesehen werden, daß der Schieber in Richtung der Nut teleskopartig verlängerbar ist. Der Schieber hat dadurch seine größte Länge, wenn die Teile der Außenform am weitestens voneinander entfernt sind und es ist durch die vorgeschlagene Einrichtung insgesamt keine Vergrößerung der Formhöhe notwendig.

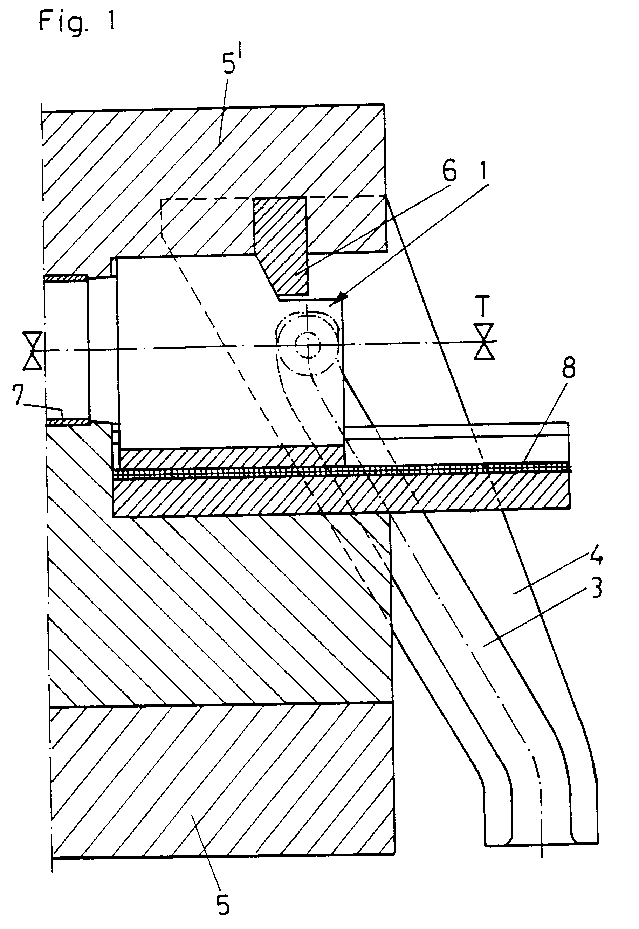

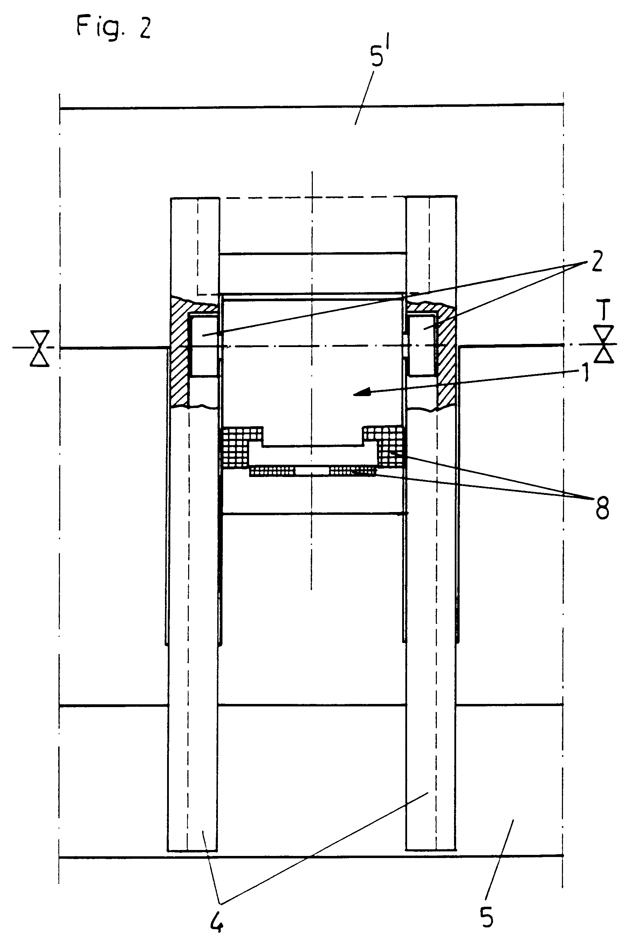

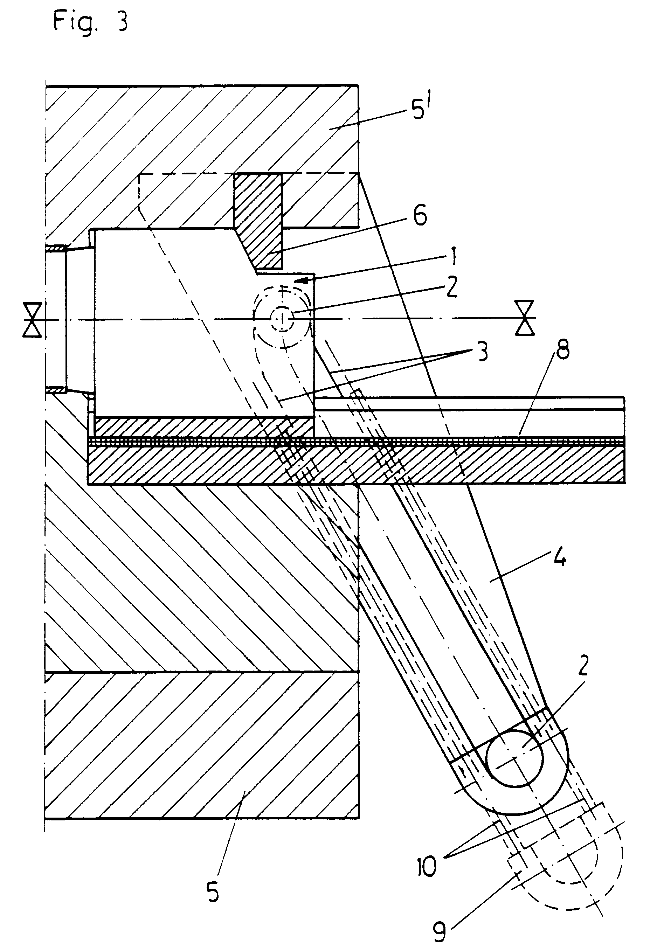

Einzelheiten der Erfindung werden anschließend anhand der Zeichnung erläutert. In dieser ist
Fig. 1 ein Schnitt durch eine Spritzgußform normal zur Trennebene der Außenform, Fig. 2 eine Fig. 1 entsprechende Ansicht von rechts in Fig. 1, Fig. 3 eine schematische Darstellung entsprechend Fig. 1 für ein Ausführungsbeispiel mit teleskopartigem Schieber.

Das in Fig. 1 in seinem für die Erfindung wesentlichen Teil dargestellte Spritzgießwerkzeug dient dazu, einen Spritzling 7 herzustellen, welcher die Form eines Rohrstückes, beispielsweise eines aus Kunststoff gefertigten Fittings aufweist. Die hiezu verwendete Form besteht aus einem Formkern 1 und aus einer in der Ebene T trennbaren Außenform mit den Formhälften 5 und 5'. Die Formhälfte 5 bleibt dauernd mit dem Formkern 1 verbunden, welcher auf dieser Formhälfte in einer Führung 8 längsverschiebbar angeordnet ist. Die Führung 8 des Formkernes 1 besteht aus selbstschmierenden Flach- bzw. Winkelleisten.

Während des Spritzvorganges wird der Formkern 1 durch die Sperre 6 zwischen den geschlossenen Formhälften 5, 5' gehalten. Nach dem Spritzvorgang entfernt sich die Formhälfte 5' von der Formhälfte 5. Dabei bieten Nuten 3 in seitlich des Formkernes 1 angeordneten Platten, welche zusammen den Schieber 4 darstellen, eine Zwangsführung für seitlich am Formkern 1 in Form von Rollen angeordnete Vorsprünge 2. Die Enden der Nuten 3 verlaufen jeweils normal zur Führung 8, sodaß am Anfang und am Ende der Öffnungs- bzs. Schließbewegung der Form keine Bewegung des Formkernes 1 erfolgt. Die Größe der während der Bewegung des Formkernes 1 auf diesen einwirkenden Kräfte richtet sich nach der Neigung der Nut, wobei im Mittelbereich der Bewegung einer bestimmten Verschiebung der Formhälften ein relativ großer Weg des Formkernes 1 zugeordnet werden muß.

Aus Platzgründen soll der Schieber 4 nicht über das äußere Ende der Formhälfte 5 vorstehen. Wenn dies zu einer zu großen Einschränkung für den Hub des Formkernes führt, kann, wie in Fig. 3 dargestellt, der Schieber 4 mit einer teleskopartigen Verlängerung versehen werden. Die Führungsbolzen 10 des Kulissenteiles 9 sind dabei jeweils entsprechend der momentanen Stellung der Vorsprünge 2 ausgefahren. Das Ausfahren des Schiebers 4 kann hiezu durch die Rollen selbst bewirkt werden, wobei eine Rückholfeder den Kulissenteil 9 an den Vorsprüngen 2 zur Anlage bringen kann. Die Position des Kulissenteiles 9 kann aber auch durch Anschläge oder Führungen, welche mit der Formhälfte 5 verbunden sind, normal zur Richtung der Bahn 8 festgelegt werden.

## Patentansprüche

1. Spritzgußform zum Herstellen eines Rohrstückes, mit einer teilbaren Außenform und einem entlang einer Formhälfte der Außenform verschiebbaren Formkern, dessen Abstand von seiner eingeschobenen Stellung bewegungsschlüssig durch seinen seitlichen Abstand von der anderen Formhälfte der Außenform bestimmt ist, wobei ein die Trennebene der Außenform überbrückender, an dieser Formhälfte angeordneter Schieber mit dem Formkern in Eingriff steht, dadurch gekennzeichnet, daß der Formkern (1) mindestens einen seitlichen Vorsprung (2) aufweist, der mit einer Nut (3) des Schiebers (4) in Eingriff steht.

2. Spritzgußform nach Anspruch 1, dadurch gekennzeichnet, daß der Schieber (4) durch zwei seitlich des Formkerns (1) verlaufende Platten gebildet ist und die korrespondierenden Vorsprünge (2) in der Trennebene (T) der Außenform angeordnet sind.

3. Spritzgußform nach Anspruch 1 oder 2, dadurch gekennzeichnet, daß die seitlichen Vorsprünge (2) durch Rollen gebildet sind.

4. Spritzgußform nach einem der Ansprüche 1 bis 3, dadurch gekennzeichnet, daß die Nuten (3) in ihren Endbereichen einen größeren Winkel mit der Bahn des Formkerns (1) einschließen als in ihrem mittleren Bereich.

5. Spritzgußform nach einem der Ansprüche 1 bis 4, dadurch gekennzeichnet, daß der Schieber (4) in Richtung der Nut (3) teleskopartig verlängerbar ist (Fig. 3).
